# EUROPEAN PATENT SPECIFICATION

(11) **EP 0 475 938 B1**
(45) Date of publication and mention of the grant of the patent: **25.09.1996**
(21) Application number: 89908846.2
(22) Date of filing: 07.07.1989
(51) Int. Cl.: G01N 1/18

(54) **METHOD AND APPARATUS FOR SAMPLING**
VORRICHTUNG UND VERFAHREN ZUR MUSTERNAHME
PROCEDE ET APPAREIL DE PRELEVEMENT D'ECHANTILLONS

(43) Date of publication of application: 25.03.1992
(73) Proprietor: MARSHALL BIOTECHNOLOGY LIMITED, Ffrith, Clwyd LL11 5HU (GB); NORMEC (MANCHESTER) LIMITED, Rochdale OL11 3EB (GB)
(72) Inventor: FARIA, Julio, F., Cheshire WA6 6EX (GB); MARSHALL, Robert, D., Clwyd (GB); PEARSON, Robert, C.,Normec (Manchester) Limited, Rochdale OL11 3EB (GB); PEARSON, Stephen, C.,Normec (Manchester) Limited, Rochdale OL11 3EB (GB); PEPPERCORN, Duncan, Cheshire CW8 3HF (GB); WEBB, Colin, Cheshire SK14 8AH (GB); DEAN, Jonathan, Fraser,12 Booth Court, Derbyshire SK13 8BU (GB)
(74) Representative: Marsden, John Christopher
(86) International application number: GB8900857
(87) International publication number: WO9000250

(56) References cited:
- EP-A- 0 244 751
- FR-A- 1 549 443
- GB-A- 1 215 086
- GB-A- 1 353 747
- US-A- 1 854 307
- US-A- 2 309 625

## Description

The present invention relates to a method and apparatus for sampling, particularly but not exclusively for obtaining samples from a biological or bio-technological reaction process, e.g. fermentation.

Various apparatus are already known for taking samples at predetermined intervals of time from a biological or bio-technological reaction process for subsequent analysis so that the progress or course of the reaction may be followed. One such apparatus comprises a tube providing a loop through which reaction medium may pass from and back to the reaction vessel. A sampling arrangement is provided in the loop and comprises a number of sampling outlets each with a sampling valve which is opened at the appropriate time to discharge material into a sample tube. Such apparatus is however difficult to maintain sterile, particularly because of the large number of valves. Sampling apparatus is also known which includes a carousel or other support for holding samples tubes (or the like) which are indexed past a sampling outlet of the apparatus and which collect samples at desired intervals. Generally an ultra-filtration membrane is incorporated in the apparatus through which membrane the sample must pass. This membrane is intended to maintain sterile conditions in the apparatus. However a disadvantage of such apparatus is that it is difficult to sterilise and furthermore may only be used for obtaining samples of the liquid in the reaction medium since the ultra-filtration membrane prevents passage of cells into the sampling tube. In many instances, particularly in research work, it may be desired to obtain samples containing cells and this is not possible with the conventional apparatus.

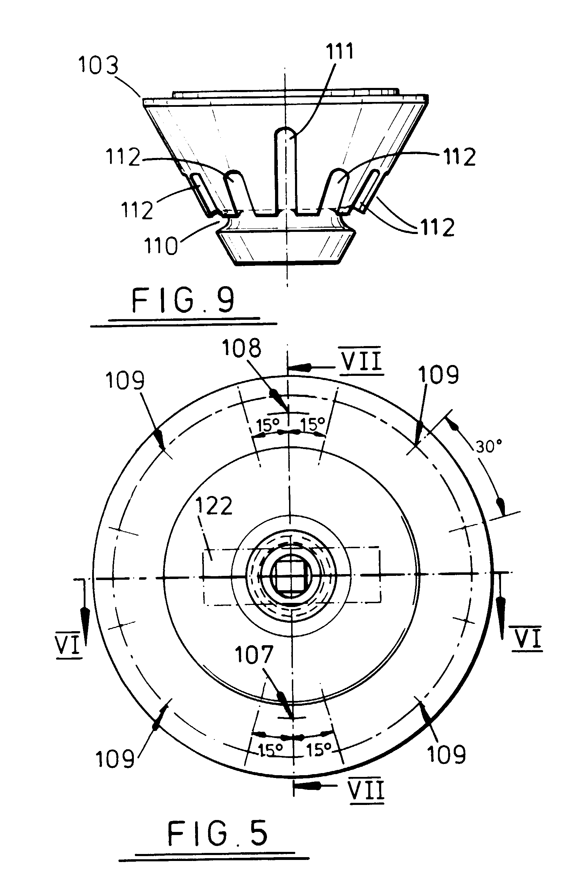

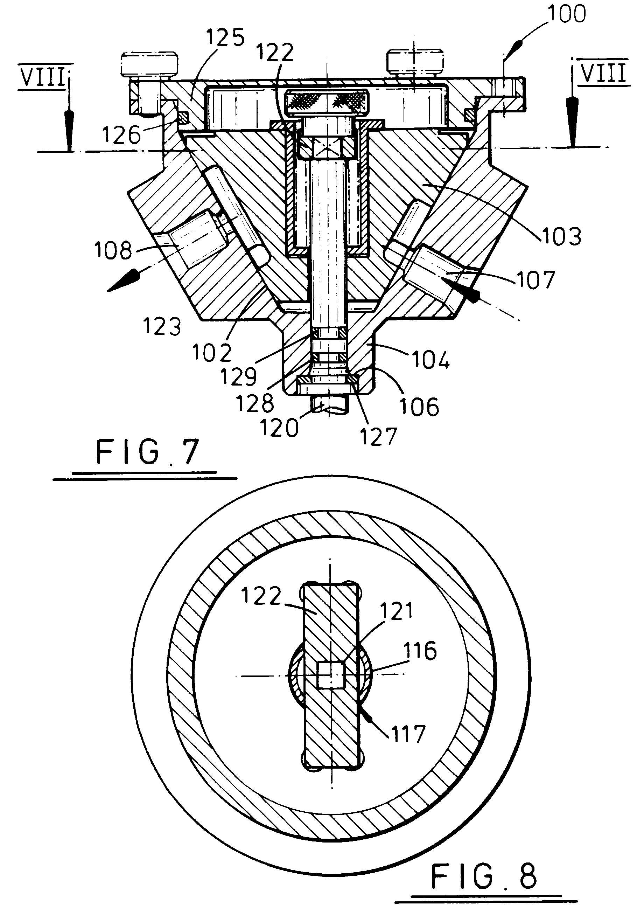

GB-A-1215086 discloses liquid sampling apparatus which may incorporate distributor means including a rotary valve. In one embodiment (Fig. 5) this comprises a rotatable and reciprocating piston; in a second embodiment (Fig. 6) the apparatus requires a pair of two-way taps and a free-floating piston in addition to the rotary valve. The mechanical complexity of the apparatus is such that it cannot readily be subjected to treatments such as autoclaving in order to ensure sterility.

According to a first aspect of the invention there is provided fluid sampling apparatus comprising (i) an inlet connectable to a source of fluid; (ii) a housing having a plurality of circumferentially spaced sample outlets extending through a wall thereof, said housing containing a rotatable distributor member constrained in use from axial movement and sealingly contacting the said wall, said distributor member having a channel adapted to provide selective communication between the inlet and any one of the sample outlets; and (iii) recirculating means which in use permit return of fluid by way of a recirculation outlet leading from the housing to the source of fluid.

Sealing contact between the distributor member and that wall of the housing which contains the sample outlets may be enhanced by having the distributor member and the wall of the housing of materials which facilitate this sealing. For example the distributor member may be of PTFE whereas the housing may be of metal such as stainless steel.

The distributor member and the wall of the housing which contains the sample outlets may be of complementary frustoconical configuration.

Preferably the inlet communicates with a channel arrangement in that face of the distributor member which sealingly contacts the wall of the housing which contains the sample outlets, whereby communication is selectively provided between the inlet and a sample outlet with simultaneous closure of the recirculation outlet by said face of the distributor member or between the inlet and the recirculation outlet with simultaneous closure of the sample outlets by said face of the distributor member.

In an alternative arrangement, both the inlet and recirculation outlet communicate with a sample-holding chamber bounded in part by the distributor member, which member contains a channel running from said chamber to that face of the member which sealingly contacts the wall of the housing containing the sample outlets, so as to be capable of providing selective communication with any one of the sample outlets upon appropriate rotation of the distributor member.

A peristaltic pump may be used to circulate fluid from the reaction medium through the apparatus.

Rotation of the distributor member is preferably effected by means of a drive shaft or the like which is axially non-moveable since such axial movement provides the possibility of contaminant material (e.g. air-borne bacteria) entering the apparatus.

Preferably also the distributor member is spring biased so as to constrain its axial movement and effect sealing contact with that wall of the housing which contains the sample outlets.

According to a second aspect of the invention there is provided a method of obtaining fluid samples from a reaction medium, for example a biological or bio-technological reaction medium, comprising passing fluid from the reaction medium to the inlet of a sampling apparatus comprising a housing having a plurality of circumferentially spaced sample outlets extending through a wall thereof, said housing containing a rotatable distributor member constrained in use from axial movement and sealingly contacting the said wall, said distributor member having a channel adapted to provide selective communication between the inlet and any one of the sample outlets, rotating the distributor member so as to provide communication between the inlet and a sample outlet at times when it is desired to take a sample of the reaction medium, further rotating the distributor member to discontinue such communication at other times, and recirculating fluid from the apparatus by way of a recirculation outlet leading from the housing to the reaction medium.

Preferably the recirculation of fluid is discontinued during times at which samples of reaction medium are taken.

Preferably the reaction medium comprises bacteria or other cells which are collected in the samples, e.g. as in whole broth from a fermentation.

The invention will be further described by way of example only with reference to the accompanying drawings, in which:
Fig. 1 is a sectional view of one embodiment of sampling apparatus in accordance with the invention;
Fig. 2 is a detail of Fig. 1 showing the apparatus in a condition for taking a sample; and
Fig. 3 illustrates an arrangement of sampling tubes around the apparatus.
Fig. 4 is a side view of a further embodiment of sampling apparatus in accordance with the invention, but omitting details of the inlet port, the recirculation outlet port, and the sampling ports for the purpose of clarity;
Fig. 5 is an underside view of the apparatus shown in Fig. 4;
Fig. 6 is a section on the line VI-VI of Fig. 5;
Fig. 7 is a section on the line VII-VII of Fig. 5;
Fig. 8 is a section on the line VIII-VIII of Fig. 7;
Fig. 9 illustrates the plug used in the apparatus of Fig. 4; and
Fig. 10 illustrates a cup as used in the apparatus of Fig. 4.

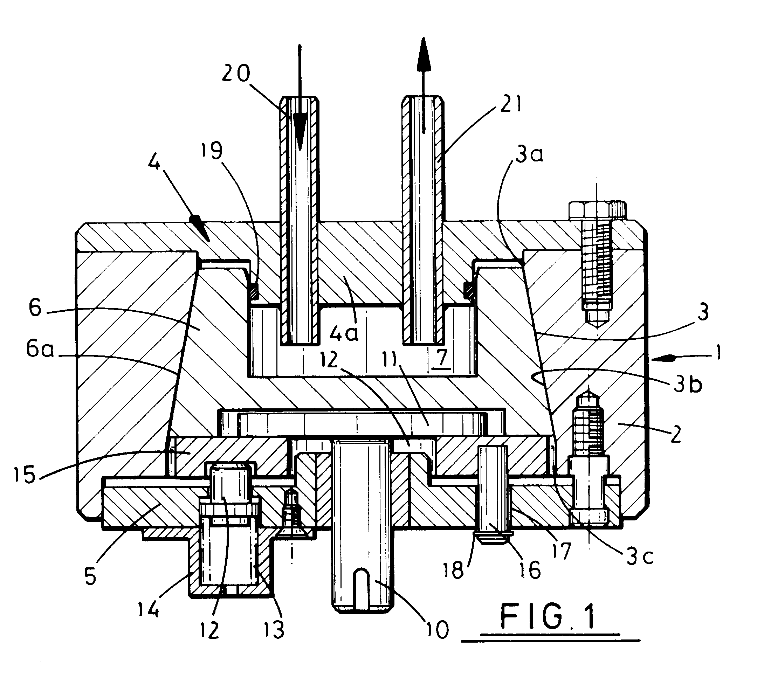

Referring to Fig. 1, the illustrated sampling apparatus 1 comprises a generally cylindrical body 2 formed with a central bore 3 closed by upper and lower end cap assemblies 4 and 5 respectively. Intermediate its upper and lower sections 3a and 3c respectively, the bore is of upwardly tapering frustoconical configuration, as referenced by 3b.

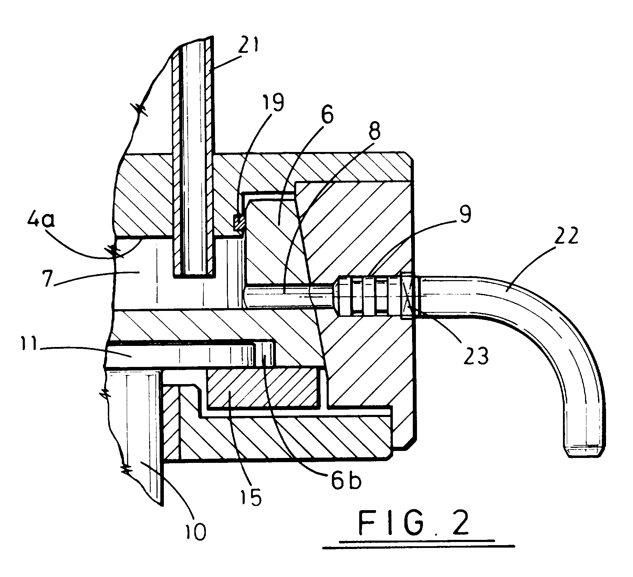

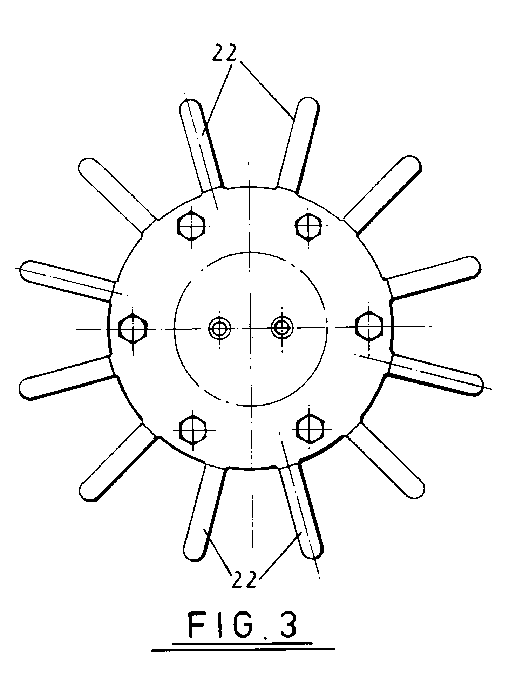

Provided within bore 3 is a rotatable distributor member 6 of PTFE. This member has an outer frustoconical face 6a which is a close sealing fit within the section 3b of the bore of body 2 such that there will be no ingress of sampled material between these two sections. A well 7 is formed in the upper part of distributor member 6 which further has a single bore 8 (Fig. 2) at a level above the floor of the well. This bore 8 is intended to be selectively registrable (as described more fully below) with any one of twelve equiangularly spaced bores 9 provided in the body 2 (see also Fig. 3).

Extending through the lower end-cap assembly 5 is a drive shaft 10 terminated within the body 2 by a cruciform end section 11 which locates in a complementary cruciform recess (not shown) provided in the base 6b of the distributor member 6. Shaft 10 is associated with a drive mechanism (not shown) capable of rotatably indexing distributor member 6 for the purpose to be described. The inter-engaging cruciform configurations ensure that axial forces exerted by the drive mechanism are not transmitted to the distributor member.

Three equiangularly spaced plungers 12 are slidable in respective apertures provided in the end cap assembly 5 and are biased inwardly of the body 2 by coil springs 13 located in ports 14 affixed to the outer surface of the cap-assembly 5. These plungers 12 serve to urge an annular plate 15 against the undersurface of the cruciform end section 11 of the drive shaft and the undersurface of the body 2 so as to retain the former in position and also to urge the distributor member 6 into the bore 3. Additionally three equiangularly spaced pins 16 are fixed on plate 15 and extend with slight clearance through apertures 17 in the end-cap 5. Circlips 18 or the like on the ends of pins 16 prevent the latter from being fully withdrawn from the end-cap. Thus the end-cap assembly may be removed from the apparatus as one unit with the plate 15.

The upper end cap assembly 4 has a central spigot 4a which extends part way into well 7. An O-ring 19 provides a seal between the spigot 4a and the wall of the well.

Extending through the end cap assembly 4 into well 7 are two tubes 20 and 21 both of which communicate with a fermentation vessel (not shown) from which samples are to be taken.

A peristaltic pump (not shown) serves to pass 'broth' from the fermentation vessel continuously along tube 20 into well 7 and then back along tube 21.

Located in each bore 9 is a right-angled outlet tube 22 on which a sample tube (not shown) may be mounted. Twelve such outlet tubes 22 are provided (see Fig. 3), one for each aperture 9. Flats 23 on the outlet tube 22 prevent unwanted rotation thereof.

In use of the apparatus, broth from the fermentation vessel is continuously circulated through the well 7. During the period of time when sampling is not required, the distributor member 6 is at a position in which its bore 8 is between two of the apertures 9 in the body 2. Leakage of broth between the distributor 6 and the body 2 is prevented as a result of the close fit between these two components. When a sample is to be taken, distributor member 6 is indexed around so that its bore 8 registers with a bore 9. Thus 'broth' passes into the associated sample tube. After a predetermined length of time (governed by the time taken to collect a sample of the required volume) the distributor member 6 is indexed further round so that its bore 8 is again out of register with a bore 9. Obviously when a further sample is required, the distributor member 6 is again indexed so that its bore 8 registers with the next bore 9 in sequence. With the illustrated apparatus, the sampling procedure may be carried out a total of twelve times.

The apparatus may of course be under computer control to effect sampling over a prolonged time period. Each sample tube may incorporate any suitable chemical to arrest the fermentation reaction at the point when that sample was taken. Thus the sample is 'frozen' for subsequent analysis. The illustrated apparatus has a number of advantages, namely:
1. Aseptic conditions are readily maintained.
2. There will be no stagnation in the well 7.
3. Sampling of whole 'broth' (i.e. including cells) is possible whilst maintaining aseptic conditions. (This is not possible in prior art sampling arrangements where ultra-filtration membranes required to maintain aseptic conditions prevent whole cell sampling).
4. The apparatus may be easily sterilised either in an autoclave or by steam sterilisation (i.e. passing steam through tubes 20 and 21).
5. The apparatus is easy to assemble and dismantle and therefore easy to clean.

Although the apparatus has been described with specific reference to collection of samples in sample tubes, it should be appreciated that one or more further units 1 may be provided as 'satellites' to the illustrated unit. Each such further unit will be in communication with a respective bore 9 of the 'base' unit. A sample at time T₁ may be passed to satellite unit S1, in which the sample is allowed to continue fermentation. Samples may then be taken from S1, at time intervals T₂₋₁₃ (assuming twelve bores 9 on S1). Similarly a sample may be taken from the base unit at time T₁₄ and passed to satellite S2 for further sampling at times of T₁₅₋₂₆, and subsequently similarly to other satellite units. Thus with a total of twelve satellite units, it is possible to take 144 samples at different time intervals.

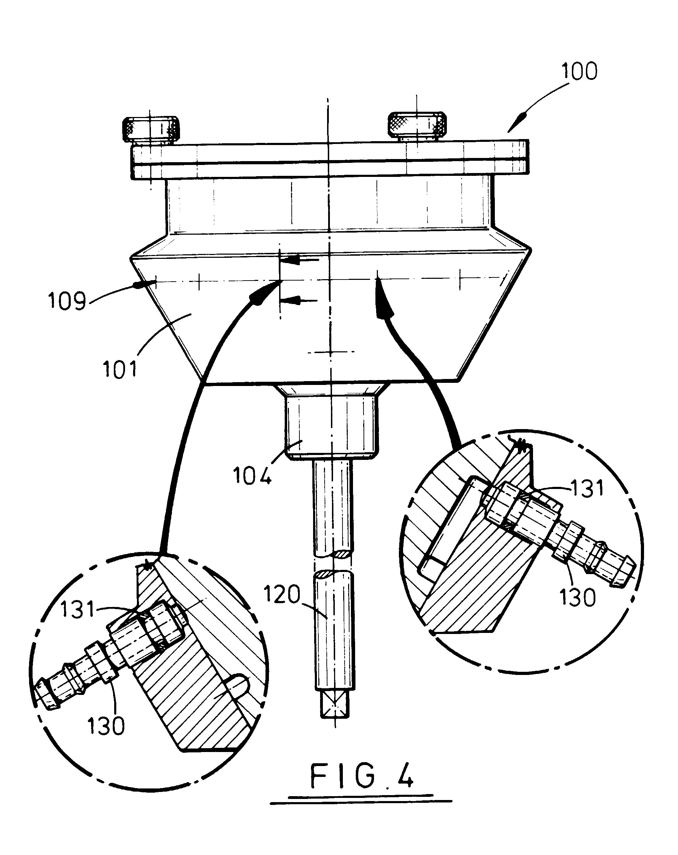

The sampling apparatus 100 illustrated in Figs. 4 to 10 comprises a stainless steel body 101 with a downwardly tapering bore 102 in which a rotatable complementary frustoconical distributor plug 103 is positioned. The body 101 itself has one open end (i.e. that end adjacent the wider end of bore 102) and at the other end is extended by a nose 104. Within this nose 104 is a bore 105 which is coaxial with bore 103 and which (in going from the free end of the nose towards bore 102) is narrowed by a step 106.

Provided within the walls of the body 101 surrounding the bore 102 are a plurality of downwardly and outwardly inclined ports as follows:
a) an inlet port 107 towards the lower end of bore 102;
b) a recirculation outlet port 108 higher up the bore 102 than the inlet port 107 and spaced around the body by 180° therefrom; and
c) twelve equiangularly spaced sampling ports 109 which are above the level of the recirculation outlet port 108 (see Fig. 5).

The sampling ports 109 are thus spaced by 30° from each other (see Fig. 5) around the body 101. Additionally, the inlet and recirculation outlet ports 107 and 108 (which are spaced by 180° from each other) are each spaced by 15° from the adjacent sampling ports.

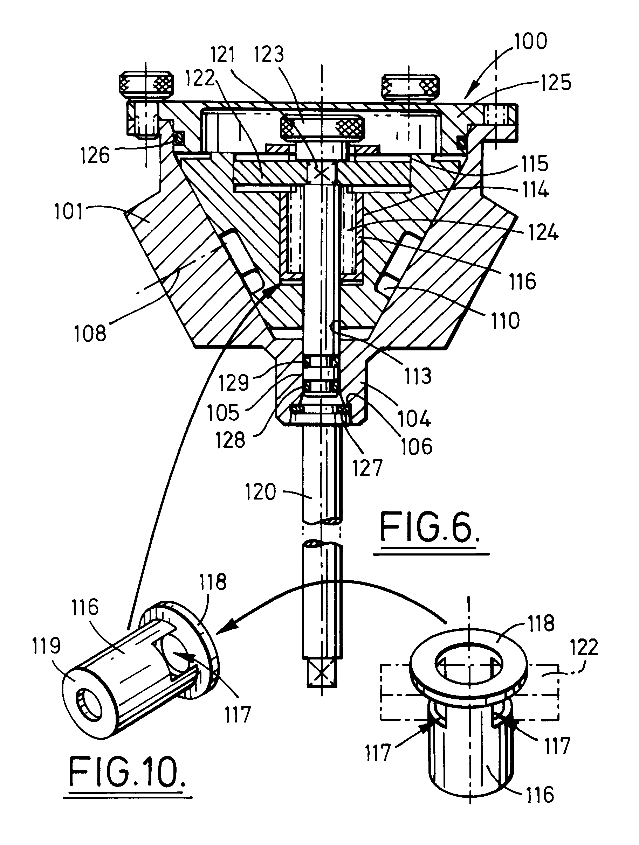

The distributor plug 103 is of PTFE which ensures that its outer frustoconical surface is a sealing fit within the bore 102. The general configuration of the plug 103 is shown in Fig. 9 and will be seen to include a lower circumferential channel 110 which, when the plug is in the bore 102, is at the level of the inlet port 107 (see Fig. 7). Communicating with channel 110 is a finger-like sub-channel 111 which extends along the frustoconical face from the channel 110 towards the upper end of the plug 103. The length of sub-channel 111 is such that with the plug 103 seated in bore 102, the upper end of the sub-channel 111 is capable of registering with a sampling port 109. Additionally, a further eleven sub-channels 112 are provided in plug 103, each communicating at their lower ends with channel 110. These sub-channels 112 are generally similar to the sub-channel 111 but are of a length such that they extend only to the level of the recirculation outlet port 108, the height of which has been indicated in chain-dot-line in Fig. 6.

There are thus a total of twelve of the finger-like sub-channels (eleven sub-channels 112 and one sub-channel 111) equiangularly disposed around plug 103.

The function of the channel 110 and the sub-channels 111, 112 will be described in more detail below.

Extending centrally within plug 103 is a bore which, in going from the bottom to the top (as viewed in Fig. 6) of the plug, is formed in two successively widening sections 113 and 114. At its upper end, bore 114 opens into a rectangular slot 115 (see also Fig. 8). Seated in bore section 114 is a cylindrical cup 116, of which a more detailed view is shown in Fig. 10. It will be seen that this cup has, towards its upper end, two diametrically opposed cut-outs 117 which are of a depth such that, with the cup 116 seated in the bore 114, they extend over the height of the slot 115. Cup 116 also has an upper annular flange 118 as shown and an aperture 119 in its base.

Rotation of the plug 103 is effected by means of a vertically fixed drive shaft 120. This shaft extends upwardly through the nose 104 of body 101 and centrally through the plug 103 and cup 116.

At its upper end, the shaft is screw-threaded (not shown) and just below these screw threads it has a square section 121 (see also Fig. 8). A rectangular key 122 is mounted on the square section 121 and is located in slot 115 with which it makes line contact. The height of key 122 is less than the depth of slot 115 for reasons which will be described below.

Key 122 is retained in position on shaft 120 by a spindle nut 123 provided on the screw threaded end of the shaft. This nut 123 prevents vertical movement of key 122 in a direction parallel to the axis of shaft 120.

It will be appreciated that rotation of shaft 120 drives the plug 103 via key 122. The fact that the height of key 122 is less than the depth of slot 115 also makes it possible for the plug 103 to move vertically relative to the bore 102. A coil spring 124 is provided in the cup 116 and serves normally to urge the plug 103 downwardly into the bore 102.

An end plate 125 is fixed on the open end of body 101 and incorporates a seal 126. Further seals 127 to 129 are provided as shown for sealing the shaft 120 within the nose 104.

In use of the apparatus, sample tubes (not shown) are mounted in each of the sampling ports 109 by means of adapters 130 (see the insert to Fig. 4) which are associated with seals 131. Additionally, the inlet and recirculation outlet ports 107 and 108 are connected to a fermenter, and a peristaltic or other constant volume pump (not shown) is provided for supplying the medium from the fermenter to the sampling apparatus. Seals (not shown) will also be provided at the inlet and recirculation outlet ports. These seals, together with the seals 127-129 and 131, prevent contamination of the interior of the sampling apparatus by the surrounding air.

Assume now that medium from the fermenter is being passed to the sampling apparatus and that it is desired merely to re-circulate the medium back to the fermenter without taking a sample. In this case, the plug may be positioned so that any one of the sub-channels 112 is in register with the recirculation outlet port 108. Medium entering the inlet port 107 will enter the circumferential channel 110 (which is at the level of the port) and will pass along this channel and then exit through the recirculation outlet port 108 via the sub-channel 112 registering therewith. It will be appreciated that the sub-channel 111 is located between two of the sampling ports 109 which are therefore closed by the face of the plug 103 between the sub-channels (see the left hand insert to Fig. 4) Thus, none of the medium passes to a sample port 109.

Consider now that it is desired to take a sample. The shaft 120 (driven by a motor - not shown) is indexed round by 15°. This brings sub-channel 111 into register with one of the sampling ports 109 (see the right hand insert on Fig. 4). Additionally the recirculation outlet port 108 is now closed off by the face of the frustoconical plug so that medium cannot pass therethrough. The plug is maintained in this position for sufficient time to collect the required sample.

The plug is now indexed round by a further 15° so as to bring a further sub-channel 112 into register with the recirculation outlet port 108, and to close off the sampling ports 109. Samples may be collected through all twelve sampling ports 109 by indexing the plug around in 15° increments in accordance with the above described procedure. It will be appreciated that at some stage during this procedure, the sub-channel 111 comes into register with the recirculation outlet port 108. This is the condition illustrated at the left hand side of Fig. 7.

In this case, the medium is able to pass through the recirculation outlet port 108 via the sub-channel 112.

The sampling apparatus illustrated in Figs. 4 to 10 has the following advantages:
(i) the angular contact between the plug 103 and the bore 102 (of the body 101) minimises friction therebetween;
(ii) since the fluid entering at the inlet 107 flows through the apparatus, either to recirculation outlet port 108 or a sampling port 109, there is no stagnation of fluid within the apparatus;
(iii) the apparatus is of compact construction, and can therefore readily be autoclaved;
(iv) during autoclaving, the plug is able to compress spring 124 so as to cater for the differential expansion between the stainless steel body 101 and the PTFE plug 103;
(v) since the liquid flow around the distributor member generates an upward force only over a comparatively small area, it is possible for the medium being supplied to the apparatus to be at comparatively high pressure whilst there is only a low upward force generated on the distributor member. It is thus possible to use low torque drive means of small size with the result that the apparatus is of compact construction; and
(vi) since the recirculation outlet 108 is closed whilst liquid is being passed through a sample port, all of the pressure of supply of the liquid to the apparatus is used in causing the liquid to flow out through the sampling port (in contrast with the apparatus of Figs. 1 to 3 in which liquid continues to recirculate through the apparatus during sampling).

## Claims

1. Fluid sampling apparatus (1;100) comprising (i) an inlet (20;107) connectable to a source of fluid and (ii) a housing (2;101) having a plurality of circumferentially spaced sample outlets (9;109) extending through a wall thereof, said housing (2;101) containing a rotatable distributor member (6;103) sealingly contacting the said wall, said distributor member (6;103) having a channel (8;110,111, 112) adapted to provide selective communication between the inlet (20;107) and any one of the sample outlets (9; 109), characterised in that said distributor member (6;103) is constrained in use from axial movement and that the apparatus further comprises recirculating means which in use permit return of fluid by way of a recirculation outlet (21; 108) leading from the housing (2;101) to the source of fluid.

2. Apparatus as claimed in claim 1 in which the distributor member (6;103) is spring biased so as to constrain its axial movement and effect sealing contact with that wall of the housing (2;101) which contains the sample outlets (9;109).

3. Apparatus as claimed in claim 1 or claim 2 in which the housing (2;101) is of metal and the distributor member (6;103) is of PTFE.

4. Apparatus as claimed in any of the preceding claims in which the distributor member (6;103) and that wall of the housing (2;101) which contains the sample outlets (9;109) are of complementary frustoconical configuration.

5. Apparatus as claimed in any of the preceding claims in which both the inlet (107) and the recirculation outlet (108) are provided in that wall of the housing (101) which contains the sample outlets (109).

6. Apparatus as claimed in claim 5 in which the inlet (107) communicates with a channel arrangement (110,111, 112) in that face of the distributor member (103) which sealingly contacts the said wall of the housing (101), whereby communication is selectively provided via said channel arrangement (110,111,112) between the inlet (107) and a sample outlet (109) with simultaneous closure of the recirculation outlet (108) by said face of the distributor member (103) or between the inlet (107) and the recirculation outlet (108) with simultaneous closure of the sample outlets (109) by said face of the distributor member (103).

7. Apparatus as claimed in claim 6 in which the inlet (107) communicates with a circumferential channel (110) in said face of the distributor member (103) from which extend a plurality of first sub-channels (112) and a single longer second sub-channel (111) in said face, the first sub-channels (112) extending to a level at which the recirculation outlet (108) is provided in the said wall of the housing (101) and the second sub-channel (111) extending to a level at which the sample outlets (109) are provided in the said wall of the housing (101), the angular disposition of the sub-channels (111, 112), sample outlets (109) and recirculation outlet (108) being such that communication between the inlet (107) and the recirculation outlet (108) is interrupted when the second sub-channel (111) is in register with a sample outlet (109) and that there is no communication between the inlet (107) and any sample outlet (109) when any of the sub-channels (111,112) is in register with the recirculation outlet (108).

8. Apparatus as claimed in any of claims 1 to 4 in which both the inlet (20) and recirculation outlet (21) communicate with a sample holding chamber (7) bounded in part by the distributor member (6), which member (6) contains a channel (8) running from said chamber (7) to that face of the member (6) which sealingly contacts the wall of the housing (2) containing the sample outlets (9), so as to be capable of providing selective communication with any one of the sample outlets (9) upon appropriate rotation of the distributor member (6).

9. A method of obtaining fluid samples from a reaction medium which consists of passing fluid from the reaction medium to the inlet (20;107) of a sampling apparatus (1; 100) comprising a housing (2;101) having a plurality of circumferentially spaced sample outlets (9;109) extending through a wall thereof, said housing (2;101) containing a rotatable distributor member (6;103) sealingly contacting the said wall, said distributor member (6; 103) having a channel (8;110,111,112) adapted to provide selective communication between the inlet (20;107) and any one of the sample outlets (9;109), rotating the distributor member (6;103) so as to provide communication between the inlet (20;107) and a sample outlet (9;109) at times when it is desired to take a sample of the reaction medium, and further rotating the distributor member (6;103) to discontinue such communication at other times, characterised in that said distributor member (6;103) is constrained in use from axial movement and that fluid from the apparatus (1;100) is recirculated by way of a recirculation outlet (21;108) leading from the housing (2;101) to the reaction medium.

10. A method as claimed in claim 9 in which recirculation of fluid is discontinued during times at which samples of reaction medium are taken.

11. A method as claimed in claim 9 or claim 10 in which the reaction medium is a fermentation broth and samples of whole broth are collected.

## Patentansprüche

1. Fluidprobenvorrichtung (1;100), umfassend
(i) einen Einlaß (20;107), der an eine Fluidquelle anschließbar ist, und
(ii) ein Gehäuse (2;101) mit einer Anzahl von auf dem Umfang verteilten Probeauslässen (9;109), die sich durch eine Wand von diesem erstrecken, wobei das Gehäuse (2; 101) ein drehbares Verteilerelement (6;103) aufweist, das dicht an dieser Wand anliegt, wobei dieses Verteilerelement (6;103) einen Kanal (8;110, 111, 112) aufweist, der dazu geeignet ist, eine selektive Verbindung zwischen dem Einlaß (20; 107) und einem der Probenauslässe (9;109) vorzusehen,
**dadurch gekennzeichnet**,
daß dieses Verteilerelement (6;103) beim Gebrauch an einer axialen Bewegung gehindert ist und daß die Vorrichtung weiterhin eine Rezirkulierungseinrichtung aufweist, die beim Gebrauch zuläßt, Fluid mittels eines Rezirkulierungsauslasses (21;108), der von dem Gehäuse (2; 101) zu der Fluidquelle führt, zurückzuführen.

2. Vorrichtung nach Anspruch 1, wobei das Verteilerelement (6; 103) federbeaufschlagt ist, so daß seine axiale Bewegung behindert wird und eine dichte Anlage an der Wand des Gehäuses (2;101) bewirkt wird, welche die Probenauslässe (9;109) aufweist.

3. Vorrichtung nach Anspruch 1 oder Anspruch 2, wobei das Gehäuse (2; 101) aus Metall und das Verteilerelement (6;103) aus PTFE besteht.

4. Vorrichtung nach einem der vorhergehenden Ansprüche, wobei das Verteilerelement (6;103) und die Wand des Gehäuses (2; 101), welche die Probenauslässe (9; 109) aufweist, ein komplementäre kegelstumpfförmige Gestalt haben.

5. Vorrichtung nach einem der vorhergehenden Ansprüche, wobei sowohl der Einlaß (107) und der Rezirkulationsauslaß (108) in der Wand des Gehäuses (101) vorgesehen sind, welche die Probenauslässe (109) aufweist.

6. Vorrichtung nach Anspruch 5, wobei der Einlaß (107) mit einer Kanalanordnung (110, 111, 112) auf der Seite des Verteilerelementes (103) in Verbindung steht, die dicht an der Wand des Gehäuses (101) anliegt, wobei eine Verbindung selektiv vorgesehen wird über diese Kanalanordnung (110, 111, 112) zwischen dem Einlaß (107) und einem Probenauslaß (109) unter gleichhzeitigem Abschließen des Rezirkulationsauslasses (108) durch diese Seite des Verteilerelementes (103) oder zwischen dem Einlaß (107) und dem Rezirkulationsauslaß (108) unter gleichzeitigem Abschließen der Probenauslässe durch diese Seite bzw. Fläche des Verteilerelementes (103).

7. Vorrichtung nach Anspruch 6 , wobei der Einlaß (107) mit einem Umfangskanal (110) auf der Seite bzw. Fläche des Verteilerelementes (103) in Verbindung steht, von der aus sich eine Anzahl von ersten Nebenkanälen (112) und ein einzelner längerer zweiter Nebenkanal (111) auf dieser Seite erstreckt, wobei die ersten Nebenkanäle (112) sich auf ein Niveau erstrecken, auf dem der Rezirkulationsauslaß (108) in der Wand des Gehäuses (101) vorgesehen ist, und der zweite Nebenkanal (111) sich auf ein Niveau erstreckt, auf dem die Probenauslässe (109) in dieser Wand des Gehäuses (101) vorgesehen sind, wobei die Winkelanordnung der Nebenkanäle (111, 112), der Probenauslässe (109) und des Rezirkulationsauslasses (108) derart ist, daß eine Verbindung zwischen dem Einlaß (107) und dem Rezirkulationsauslaß (108) unterbrochen wird, wenn der zweite Nebenkanal (111) mit einem Probenauslaß (109) ausgerichtet ist, und daß keine Verbindung vorhanden ist zwischen dem Einlaß (107) und irgendeinem Probenauslaß (109), wenn einer der Nebenkanäle (111, 112) mit dem Rezirkulationsauslaß (108) ausgerichtet ist.

8. Vorrichtung nach einem der Ansprüche 1 bis 4, wobei sowohl der Einlaß (120) als auch der Rezirkulationsauslaß (21) mit einer Probenhaltekammer (7) in Verbindung steht, die teilweise durch das Verteilerelement (6) begrenzt wird, wobei das Element (6) einen Kanal (8) aufweist, der von dieser Kammer (7) zu der Seite des Elements (6) verläuft, die dicht an der Wand des Gehäuses (2) anliegt, welche die Probenauslässe (9) aufweist, so daß eine selektive Verbindung mit einem der Probenauslässe (9) bei entsprechender Drehung des Verteilerelementes (6) vorgesehen werden kann.

9. Verfahren zum Erhalten von Fluidproben aus einem Reaktionsmedium, das darin besteht, ein Fluid aus dem Reaktionsmedium zu dem Einlaß (20;107) einer Probenvorrichtung (1;100) strömen zu lassen, welche ein Gehäuse (2; 101) mit einer Anzahl von auf dem Umfang beabstandeten Probenauslässen (9;109) aufweist, die sich durch eine Wand von diesem erstrecken, wobei das Gehäuse (2;101) ein drehbares Verteilerelement (6;103) aufweist, das an dieser Wand dicht anliegt, wobei das Verteilerelement (6;103) einen Kanal (8; 110, 111, 112) aufweist, der dazu geeignet ist, eine selektive Verbindung zwischen dem Einlaß (20; 107) und einem der Probenauslässe (9;109) bei Drehung des Verteilerelementes (6;103) vorzusehen, so daß eine Verbindung zwischen dem Einlaß (20; 107) und einem Probenauslaß (9;109) dann hergestellt wird, wenn es erwünscht ist, eine Probe des Reaktionsmediums zu nehmen, und weiterhin das Verteilerelement (6;103) gedreht wird, um eine solche Verbindung dann wieder zu unterbrechen,
**dadurch gekennzeichnet**,
daß das Verteilerelement (6;103) im Gebrauch an einer Axialbewegung gehindert wird und das Fluid aus der Vorrichtung (1;100) mittels eines Rezirkulationsauslasses (21;108) rezirkuliert wird, der von dem Gehäuse (2;101) zu dem Reaktionsmedium führt.

10. Verfahren nach Anspruch 9, wobei die Rezirkulation des Fluids dann unterbrochen wird, wenn Proben des Reaktionsmediums genommen werden.

11. Verfahren nach Anspruch 9 oder 10, wobei das Reaktionsmedium eine Fermentationsbrühe ist und Proben der gesamten Brühe gesammelt werden.

## Revendications

1. Dispositif de prélèvement d'échantillons fluides (1; 100) comprenant (i) une entrée (20; 107) pouvant être raccordée à une source de fluide et (ii) un logement (2; 101) comportant une pluralité de sorties d'échantillons espacées circonférentiellement (9; 109) s'étendant à travers une paroi du logement, ce logement (2; 101) contenant un élément distributeur rotatif (6; 103) venant en contact de façon hermétique avec la paroi, l'élément distributeur (6; 103) comportant un canal (8; 110, 111, 112) apte à établir une communication sélective entre l'entrée (20; 107) et l'une quelconque des sorties d'échantillons (9; 109), caractérisé en ce que l'élément distributeur (6; 103) est précontraint dans l'utilisation pour le mouvement axial et en ce que le dispositif comprend de plus des moyens de recirculation permettant, dans l'utilisation, le retour du fluide par une sortie de recirculation (21; 108) allant du logement (2; 101) à la source de fluide.

2. Dispositif selon la revendication 1, dans lequel l'élément distributeur (6; 103) est sollicité par un ressort de façon à précontraindre son mouvement axial et établir un contact hermétique avec la paroi du logement (2; 101) qui contient les sorties d'échantillons (9; 109).

3. Dispositif selon la revendication 1 ou la revendication 2, dans lequel le logement (2; 101) est en métal et l'élément distributeur (6; 103) est en PTFE.

4. Dispositif selon l'une quelconque des revendications précédentes, dans lequel l'élément distributeur (6; 103) et la paroi du logement (2; 101) qui contient les sorties d'échantillons (9; 109) sont de configuration tronconique complémentaire.

5. Dispositif selon l'une quelconque des revendications précédentes, dans lequel à la fois l'entrée (107) et la sortie de recirculation (108) sont ménagées dans la paroi du logement (101) qui contient les sorties d'échantillons (109).

6. Dispositif selon la revendication 5, dans lequel l'entrée (107) communique avec un agencement de canal (110, 111, 112), la face de l'élément distributeur (103) venant en contact hermétique avec la paroi du logement (101), la communication étant établie sélectivement par cet agencement de canal (110, 111, 112) entre l'entrée (107) et une sortie d'échantillon (109) avec fermeture simultanée de la sortie de recirculation (108) par la face de l'élément distributeur (103) ou entre l'entrée (107) et la sortie de recirculation (108) avec la fermeture simultanée des sorties d'échantillons (109) par la face de l'élément distributeur (103).

7. Dispositif selon la revendication 6, dans lequel l'entrée (107) communique avec un canal circonférentiel (110) dans la face de l'élément distributeur (103) à partir duquel s'étendent une pluralité de premiers sous-canaux (112) et un second sous-canal unique de plus grande longueur (111) dans la face, les premiers sous-canaux (112) s'étendant à un niveau où est ménagée la sortie de recirculation (108) dans la paroi du logement (101) et le second sous-canal (111) s'étendant à un niveau où les sorties d'échantillons (109) sont ménagées dans la paroi du logement (101), la disposition angulaire des sous-canaux (111, 112), les sorties d'échantillons (109) et la sortie de recirculation (108) étant telles que la communication entre l'entrée (107) et la sortie de recirculation (108) est interrompue lorsque le second sous-canal (111) est en coïncidence avec une sortie d'échantillon (109) et en ce qu'il n'y a pas de communication entre l'entrée (107) et toute sortie d'échantillon (109) lorsque l'un quelconque des sous-canaux (111, 112) est en coïncidence avec la sortie de recirculation (108).

8. Dispositif selon l'une quelconque des revendications 1 à 4, dans lequel à la fois l'entrée (20) et la sortie de recirculation (21) communiquent avec une chambre de retenue d'échantillon (7) limitée en partie par l'élément distributeur (6), lequel élément (6) contient un canal (8) cheminant de la chambre (7) à la face de l'élément (6) qui vient en contact hermétiquement avec la paroi du logement (2) contenant les sorties d'échantillons (9) de façon à permettre d'établir la communication sélective avec l'une quelconque des sorties d'échantillons (9) lors de la rotation appropriée de l'élément distributeur (6).

9. Procédé pour l'obtention d'échantillons fluides à partir d'un milieu réactionnel qui consiste à faire passer le fluide depuis le milieu réactionnel vers l'entrée (20; 107) d'un dispositif d'échantillonnage ou de prélèvement d'échantillons (1; 100) comprenant un logement (2; 101) avec une pluralité de sorties d'échantillons espacées circonférentiellement (9; 109) s'étendant à travers la paroi du logement, ce logement (2; 101) contenant un élément distributeur rotatif (6; 103) venant en contact hermétiquement avec la paroi, cet élément distributeur (6; 103) comportant un canal (8; 110, 111, 112) apte à établir une communication sélective entre l'entrée (20; 107) et l'une quelconque des sorties d'échantillons (9; 109), faisant tourner l'élément distributeur (6; 103) de façon à établir une communication entre l'entrée (20; 107) et une sortie d'échantillon (9; 109) aux moments où cela est souhaité, pour prélever un échantillon du milieu réactionnel, et en faisant de plus tourner l'élément distributeur (6; 103) de façon à interrompre la communication à d'autres moments, caractérisé en ce que l'élément distributeur (6; 103) est précontraint dans l'utilisation pour le mouvement axial et en ce que le fluide provenant de l'appareil (1; 100) est remis en circulation par la sortie de recirculation (21; 108) menant du logement (2; 101) au milieu réactionnel.

10. Procédé selon la revendication 9, dans lequel la recirculation du fluide est interrompue aux moments où l'on prélève les échantillons du milieu réactionnel.

11. Procédé selon la revendication 9 ou la revendication 10, dans lequel le milieu réactionnel est un bouillon de fermentation et où l'on recueille des échantillons de la totalité du bouillon.
